(19) Europäisches Patentamt
European Patent Office
Office européen des brevets

(11) **EP 2 483 176 B1**

(12) **EUROPEAN PATENT SPECIFICATION**

(45) Date of publication and mention
of the grant of the patent:
**11.06.2014 Bulletin 2014/24**

(51) Int Cl.:
**B65D 85/804** (2006.01)   **A23L 2/395** (2006.01)
**A23C 9/16** (2006.01)   **A23F 5/12** (2006.01)

(21) Application number: **10750113.2**

(22) Date of filing: **01.09.2010**

(86) International application number:
**PCT/EP2010/062820**

(87) International publication number:
**WO 2011/039027 (07.04.2011 Gazette 2011/14)**

(54) **DRINK POWDER PAD**

GETRÄNKEPULVERPAD

DOSETTE DE POUDRE POUR BOISSON

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 US 247140 P**

(43) Date of publication of application:
**08.08.2012 Bulletin 2012/32**

(73) Proprietor: **Regilait
71118 Saint Martin Belle Roche (FR)**

(72) Inventor: **DU BOUAYS DE COUESBOUC, Arnaud
F-71000 Macon (FR)**

(74) Representative: **Colombet, Alain André et al
Cabinet Lavoix
62, rue de Bonnel
69448 Lyon Cedex 03 (FR)**

(56) References cited:
**EP-A1- 0 756 844      EP-A1- 1 859 683
EP-A1- 1 985 213      WO-A1-03/099030
WO-A1-2006/078162**

**Description**

The present invention relates to a pad comprising a water-soluble powder intended for the preparation of drinks suitable for consumption.

Pads, in particular flexible pads, in combination with machines suited to their use, represent an increasing share of the items supplied by devices allowing the preparation of individual drinks, such as coffee, cappuccino, chicory, soup, tea, including herbal tea, or chocolate.

Pads comprising a milk powder or a creamer are known for producing drinks of "café au lait" (white coffee) or cappuccino type. They can be used alone in a coffee machine suitable for producing a foaming milky composition which will subsequently be mixed with another drink, such as coffee. They can also be used in combination, in a suitable coffee machine, with a second pad comprising a product which makes it possible to form the main drink, such as coffee. Patent Application EP 0 756 844 describes a kit comprising a first pad comprising a creamer powder and a second pad comprising a coffee powder which, used in a suitable coffee machine, makes it possible to obtain, in a single operation, a drink of cappuccino type. However, one of the technical problems related to the use of this kit lies in the fact that the passage of the water does not take place uniformly through the entire volume of the pad comprising the creamer, thus limiting the amount available for the drink and resulting in a drink having unsatisfactory properties of taste, appearance and texture.

One solution to this technical problem is described in Patent EP 1 398 279. This solution consists of a pad comprising an envelope made of filter paper comprising a water-soluble powder, such as a milk powder or a creamer, and a stiffening body positioned inside the envelope. The stiffening body has a grid structure forming compartmentation walls inside the envelope, which makes it possible to improve the passage of the water and increases the effectiveness of dissolution of the milk powder or creamer powder. However, this solution can be expensive and complicated to implement. In addition, the volume occupied by the stiffening body inside the pad has a detrimental effect on the amount of powder to be dissolved, which is a limiting factor for this technology.

Another solution is described in Patent Application WO 2006/043102. This solution consists in adding absorbent insoluble particles to the pad comprising a water-soluble powder, which particles are supposed to promote the passage of the water and the dissolution of the water-soluble powder.

It is an objective of the present invention to solve the abovementioned problems and in particular to provide a solution which makes it possible to improve the passage of the water through a pad comprising a water-soluble powder and consequently the dissolution of the said powder.

Another objective of the invention is to provide a solution which is inexpensive and easy to implement and in particular which does not require a complex adaptation of the pad.

Another objective of the invention is to provide a solution which makes it possible to prepare a drink suitable for consumption which exhibits satisfactory properties of appearance, taste and texture.

Thus, a subject-matter of the present invention is first of all a pad for the preparation of a drink suitable for consumption comprising:

a storage volume,
this storage volume comprising a water-soluble powder,
the water-soluble powder is chosen from the group consisting of powder formed of milk or resulting from milk, creamer powders, toppings and/or their mixtures,
the mean size of the powder particles being greater than or equal to 0.7 mm and preferably between 0.7 and 5 mm.

The mean size or particle size of the particles forming the water-soluble powder is determined by passing a defined amount of powder through vibrating sieves with different mesh sizes; the contents of each sieve are subsequently weighed to result in a distribution of each particle size band corresponding to each sieve, this distribution making it possible to calculate the mean size. Such a method is known to a person skilled in the art.

The following can be described as method which can be used. A sample of water-soluble powder is withdrawn and is passed through in the sample splitter (for example Retsch® model RT1.25) until a sample of approximately 100 g is obtained. The sample splitter is used to guarantee that the sample is representative, as is known per se. Various sieves (diameter 200 mm, height 50 mm) with a respective mesh size of 4, 2, 1, 0.63 and 0.315 mm are stacked, along with the base used for the recovery of the fine particles. The amount of powder present in the splitter is weighed and then the powder is transferred into the top sieve. The stack of sieves is placed on the sieve shaker (for example Retsch® model AS200 Digit). The said shaker is vibrated for 3 minutes, the amplitude of vibration being adjusted if needed and without damaging the powder. The amount of powder on each sieve is weighed.

The various particle size bands are thus expressed as percentage of splitting by weight of the sample initially poured into the sieve shaker, according to the following model:

-    V% by weight of particles included in the particle size range 4 mm - 2 mm

- W% by weight of particles in the particle size range 2 mm - 1 mm
- X% by weight of particles in the particle size range 1 mm - 0.63 mm
- Y% by weight of particles in the particle size range 0.63 mm - 0.315 mm
- Z% by weight of particles in the particle size range 0.315 mm - 0 mm
  with V+W+X+Y+Z = 100%.

The respective middle of each particle size range corresponding to each of these percentages is determined, i.e. 3, 1.5, 0.815, 0.4725 and 0.1575 mm. The mean size of the particles T, expressed in mm, is calculated using the following formula:

$$T = 3 \times V + 1.5 \times W + 0.815 \times X + 0.4725 \times Y + 0.1575 \times Z$$

The term "water-soluble powder" means any powder which completely or largely dissolves in the presence of water.

The term "creamer" means any milk or cream substitute not comprising or comprising little in the way of ingredients resulting from milk.

The term "topping" means any instantaneous dairy composition based on milk or on its derivatives in the powder form.

The milk powders, creamers and toppings can additionally comprise nondairy constituents, such as sugar, sweeteners or flavourings.

In a preferred embodiment, the fat content by weight in the powder according to the invention, in particular the powder formed of milk or of its derivatives, the creamer powder or the topping powder, is between 0 and 45%, preferably between 0 and 16%.

In a preferred embodiment, the creamer comprises a substance chosen from the group consisting of vegetable fats, milk proteins, emulsifiers, stabilizing agents, foaming agents, dairy fats, starch derivatives, soy proteins, sweeteners, colorants, aromatic adjuvants, nutriments, preservatives, flow agents and/or their mixtures.

In another embodiment, the water-soluble powder is chosen from the group consisting of powders not comprising milk or its derivatives, and/or not comprising a milk substitute. Powders based on cocoa, chocolate, tea or tea extracts, soy, coffee, chicory, fruits, fruit juices, fruit syrups, plants, honey and their mixtures may be mentioned as examples. Soup powders may also be mentioned as examples.

The abovementioned powders can also comprise adjuvants, such as, for example, sugars, sweeteners or flavourings.

The size of the particles of powder according to the invention makes it possible to optimize the capability of dissolution by steam or by hot water, preventing in particular the creation of preferred passages within the product, passages which prevent homogeneous wetting and homogeneous dissolution of the product. Thus, the powders according to the invention have a mean particle size of between 0.7 and 5 mm, more particularly between 0.7 and 3 mm, preferably between 1 and 3 mm.

In a preferred embodiment, the powder is provided in the form of granules obtained by the agglomeration of fine individual grains of a pulverulent product. The granules according to the invention have a mean particle size of between 0.7 and 5 mm, more particularly between 0.7 and 3 mm, preferably between 1 and 3 mm. These granules exhibit improved dissolution properties in comparison with the pulverulent starting material and further promote the dissolution of the product.

Typically, the mean size of the individual grains forming the granules is between 0.1 and 120 μm.

In a preferred embodiment of the invention, the pad comprises a powder formed of milk or resulting from milk obtained by granulation starting from a powdered milk. The principle of the granulation consists in bringing fine particles of powdered milk into contact with water, steam , combination of water and steam or any binding agent, thus forming agglomerates, and then drying the said agglomerates, in particular by injection of hot air, optionally in combination with subsequent injection of cold air.

The invention is not limited to this method of granulation; it applies to granules obtained by other routes.

According to a preferred embodiment, the pad comprises a powder formed of milk or resulting from milk which makes it possible to obtain a milky drink having a solids content of greater than or equal to 4.5%, preferably of greater than or equal to 5%. The solids content can in particular be between 4.5 and 6.5%, preferably between 5 and 6.5% and more particularly between 5.5 and 6.5%.

In a preferred embodiment, the bulk density of the water-soluble powder is between 150 and 350 g/l, preferably between 200 and 350 g/l. The bulk density can in particular be between 250 and 350 g/l.

The bulk density of the water-soluble powder is determined by weighing a defined volume of powder. It is expressed in g/l. It can be measured, for example, by filling with powder a container of defined volume, for example of 0.5 1, which has been tared beforehand. The heap of powder is levelled with a small ruler and then the container is placed on a balance. The bulk density is calculated by multiplying by two the weight obtained on the balance.

Conventionally, the term "mean particle size" is referred to. This is because a powder comprises particles having a particle size distributed over a certain range. A homogeneous population of particles generally exhibits a distribution in the shape of a Gaussian curve, centred overall on the predominant size. In the present invention, it is desirable to avoid particles which are small in size and in particular fines.

In a preferred embodiment, the proportion by weight of particles having a size of less than 0.315 mm in the water-soluble powder is less than or equal to 20%, preferably less than or equal to 10% and advantageously less than or equal to 5, 4, 3, 2, 1, or 0.1%.

Advantageously, the storage volume has a volume greater than the volume of powder which it comprises, which prevents any crushing of the powder during the closing of the storage volume.

Advantageously again, the storage volume has a volume greater than the volume of powder which it comprises, which prevents any crushing and/or moistening of the powder during the insertion or use of the pad in the device allowing the preparation of the drink. In particular, the storage volume is greater than the volume of powder in a proportion ranging from 0.01 to 40%, preferably from 15 to 35%.

The invention finds application in all types of pad, whether rigid, semirigid or flexible. Consequently, according to various embodiments, the pad is rigid, semirigid or flexible.

According to one embodiment, the pad also comprises a rigid body forming compartments inside the storage volume, for example a honeycomb structure.

According to one embodiment, the pad is a flexible or semirigid pad and is equipped with a hoop positioned around it and internally, delimiting the storage volume. This hoop protects the powder from the stresses which can be exerted on it during the storage and handling of the pad. Advantageously, the hoop extends at least over the entire height of the pad.

In an alternative form, the hoop is positioned around and external to the pad, to which it is attached by appropriate means.

According to one embodiment, the pad is a pad comprising two superimposed compartments, one comprising the said powder and the other comprising a product to be extracted or to be dissolved, for example coffee, tea and the like. According to one form, the pad is modelled in order, when it is used, for the compartment containing the milk powder or the like to be positioned downstream of the other compartment. When the pad is symmetrical, the user is supposed to use it as described above and he is informed of the direction of insertion into the machine by an instruction carried on the pad or on its packaging or simply by the colour of the product showing through the material constituting the pad, for example the filter paper, filter fabric or filter nonwoven.

According to one embodiment, the compartment comprising the water-soluble powder is of the flexible or semirigid type and comprises an outer filtering envelope or comprises filtering walls which allow steam, pressurized hot water or the drink to pass through. These envelopes or walls are composed of a filtering material, in particular filter paper, filter fabric or filter nonwoven. There may be a material made of plastic or other material over the regions used for the sealing. The two envelopes are sealed at their periphery by any means and in particular by welding.

In another embodiment, the pad is of the type consisting of a capsule made of plastic or made of metal or metal alloy or comprising a natural material, such as starch, or their mixtures.

In a specific embodiment, the pad, for example flexible or semirigid pad, has a circular shape and has a mean diameter of between 20 and 110 mm, preferably between 60 and 80 mm.

In a preferred embodiment, the pad is provided in the form of a flexible pad.

A second subject-matter of the present invention relates to a process for the manufacture of a pad as discussed above, comprising the stages of:

(a) sieving a water-soluble powder using a sieve with a mesh size of greater than 0.3 mm, preferably greater than 0.4, 0.5 or 0.6 mm,
(b) filling the storage volume with the water-soluble powder without packing down the particles forming the said water-soluble powder,
(c) closing the storage volume.

The process of the invention makes it possible to remove the fine particles which can be responsible for blinding and/or for the creation of favoured pathways for the water or the steam and can generally have a detrimental effect on the capability for dissolution.

A third subject-matter of the present invention relates to a drink kit comprising a first pad according to the invention and a second pad comprising a product to be extracted or to be dissolved, it being possible for the two pads to be all in one piece or separate.

In a preferred embodiment, the second pad is provided in the form of a flexible pad.

In a specific embodiment, the second pad is positioned on the first pad.

In a preferred embodiment, the first pad and the second pad are presented separated at the time of their use.

In another preferred embodiment, the first pad and the second pad are presented connected to one another.

In a preferred embodiment, the product to be extracted or to be dissolved present in the second pad is chosen from ground coffee, tea, chocolate or cocoa.

In a specific embodiment, the second pad can comprise at least one additional ingredient, for example sugars, flavourings, sweeteners, fibres, preservatives or foaming agents, and their mixtures. The second pad can also comprise products based on milk or its derivatives, creamers, toppings and/or their mixtures.

The use of the kit according to the invention, when the pad according to the invention is placed under the second pad or vice versa, makes it possible to obtain a drink with layers which are different and distinct in colour, density and/or composition. Mention may in particular be made of the use of a kit comprising a first pad according to the invention comprising a milk powder and a second pad comprising ground coffee in order to obtain a drink exhibiting highly distinct layers which are white to cream in colour and black and/or "café au lait" in colour.

Another subject-matter of the present invention relates to the use of a pad according to the invention, alone or in combination with a second pad, in the preparation of a drink suitable for consumption, the second pad being used in the machine before, at the same time as or after the use of the first pad according to the invention.

The various characteristics presented above for the second pad also apply to the abovementioned use according to the invention.

In a preferred embodiment, the use of a pad according to the invention comprising a milk powder, alone or in combination with a second pad, makes it possible to obtain a milky drink with a top layer of foam which is white to cream in colour, which has a homogeneous texture and which endures over time.

A better understanding of the present invention and its various embodiments will be obtained on reading the following examples. These examples are given by way of indication, without a limiting nature.

Example 1: Flexible pads of skimmed milk powder for producing "café au lait"

6 flexible pads filled with skimmed milk powder are prepared while varying the filling of the storage volume and the particle size of the powder.

A sieve shaker (Retsch® model AS200 Digit) is coupled to a sieve comprising a square mesh made of 316L stainless steel in accordance with Standard 3310/L, the diameter of which is 200 mm, the height of which is 50 mm and the mesh size of which is 0.315, 0.63, 1 or 2 mm. The skimmed milk powder is sieved for 3 minutes using this sieve shaker and this sieve. The powder with a size greater than the mesh size of the sieve is recovered. The amount of powder desired is weighed into a beaker and is introduced into a pad filter (Calita® ready-to-be-filled flexible pad paper filters Mr Pad) which is sealed using a machine for the manufacture of flexible pads (Calita® model Mr Pad). The powdered milk pad thus obtained is subsequently placed at the bottom of a double pad holder and then a ground coffee pad is placed on the powdered milk pad. The holder is inserted into a coffee machine (Philips Senseo® Latte model HD7850/81) and the cover of the machine is closed. The parameters of the machine are adjusted according to 3 positions: coffee alone position, cup position and medium cup quantity position (i.e. about 100ml). The machine is started up and the hot drink is recovered in a tumbler. After waiting for a few minutes, the drink is stirred using a spoon in order to render it homogeneous.

A volume of drink is withdrawn using a 5 ml pipette in order to be able to place a weight of approximately 2 g in the pan of an electronic moisture analyser (Sartorius® model MA150). The analysis of the moisture is begun with a programme to 110°C and automatic halting by weigh variation. The total solids content (TSC), expressed as a percentage, is calculated using the following formula:

$$TSC\ (\%) = 1 - H_2O\ (\%)$$

with $H_2O$: moisture

The total solids content indicates the total amount of powder (milk and coffee) which has passed into the drink. A satisfactory drink for the consumer has a solids content similar to that of a "café au lait" obtained by drawing a coffee alone (with the same machine and the same amount of water), in which is dissolved an amount of 4 g of the same milk powder as that introduced into the pads. The optimum solids content of a drink for the consumer is greater than 4.5%, preferably greater than 5%.

The results are summarized in the following Table I:

Table I

| Products & milk pad filling | Solids content of the drink (%) | Standard deviation (%) |
|---|---|---|
| Granulated skimmed milk, Régilait standard/pad thoroughly filled | 2.92 | 0.08 |
| Granulated skimmed milk, Régilait standard/pad filled to 4.5 g | 4.55 | 0.75 |
| Granulated skimmed milk, Régilait standard, sieved > 0.315 mm/pad filled to 4.5 g | 4.97 | 0.48 |
| Granulated skimmed milk, Régilait standard, sieved > 0.63 mm/pad filled to 4.5 g | 5.23 | 0.73 |
| Granulated skimmed milk, Régilait standard, sieved > 1 mm/pad filled to 4.5 g | 5.84 | 0.24 |
| Granulated skimmed milk, Régilait standard, sieved > 2 mm/pad filled to 4.5 g | 6.07 | 0.22 |
| Skimmed milk powder "A"/pad filled to 4.5 g | 1.95 | 0.40 |
| Skimmed milk powder "B"/pad filled to 4.5 g | 1.48 | 0.7 |
| Skimmed milk powder "C"/pad filled to 4.5 g | 1.62 | 0.52 |

The granulated skimmed milk, Régilait standard, has a mean particle size between 0.9 and 1.3 mm, without sieving.

The skimmed milk powder "A" has a mean particle size of 0.33 mm.

The skimmed milk powder "B" has a mean particle size of 0.3 mm.

The skimmed milk powder "C" has a mean particle size of the order of 0.1 mm.

It is found that the partial filling of the pad with granulated skimmed milk, Régilait standard makes it possible to improve the solids content of the drink obtained,.

It is also observed that, with partial filling of the pad with milk powder, the sieving of the powder makes it possible to also improve the solids content. The greater the cut off threshold, the greater the mean size of the particles forming the powder and the richer the drink obtained. A solids content of greater than 5% is thus obtained when sieving is carried out with a sieve of greater than 0.63 mm.

On the other hand, even with partial filling of the pad, the powders "A", "B" and "C", which have a mean particle size of less than 0.6 mm, do not deliver a rich drink.

Example 2: kit comprising a first pad of skimmed milk powder and a second pad comprising ground coffee.

The first pad of milk powder is filled to 4.5 g with a sieved granulated skimmed milk, Régilait standard, with a size of greater than 1 mm and is prepared according to the procedure of Example 1.

The first pad is subsequently placed in a double pad holder and then a pad of coffee sold under the name Senseo Classique® by Maison du Café is placed above.

The holder is introduced into a coffee machine (Philips Senseo® Latte model HD 7850/81).

The machine is closed, a transparent tumbler is placed at the drink outlet and a simple drink is ordered.

The drink is observed while it flows out and then its changeover time is observed.

This operation is repeated 6 times in order to observe the variability in the delivery of the drink.

Each of the 6 drinks prepared exhibits 3 very distinct layers:

- a first layer white or cream in colour at the bottom of the tumbler,
- a second layer brown in colour ("café au lait") above the first,
- a surface layer of white or cream foam above the second layer.

The layers endure over time. The foam decreases very slowly, changing from 1 cm to 5 mm approximately over 45 minutes.

Example 3: Simultaneous use of a first pad of skimmed milk powder and then of a second pad comprising ground coffee

The first pad of milk powder is filled to 4.5 g with a sieved granulated skimmed milk, Régilait standard, with a size of greater than 1 mm and prepared according to the process of Example 1.

This pad is subsequently placed in a single pad holder, which is introduced into a coffee machine (Philips Senseo® Latte model HD 7850/81).

The machine is closed, a transparent tumbler is placed at the drink outlet and a simple drink is ordered.

A hot white milk comprising a top layer of homogeneous foam is obtained.

The first pad is removed from the holder and a second pad of coffee sold under the name Senseo Classique® by Maison du Café is put in.

The machine is closed, the tumbler of hot milk is left in place at the drink outlet and a simple drink is ordered.

The drink is observed while it flows out and then its changeover time is observed.

This operation is repeated 6 times in order to observe the variability in the visual delivery of the drink.

Each of the 6 drinks prepared exhibits 4 very distinct layers:

- a first layer white in colour at the bottom of the tumbler,
- a second layer light brown in colour ("café au lait") above the first,
- a third layer dark brown in colour (coffee) above the second,
- a surface layer of white foam above the third.

The layers endure over time and the foam decreases very slowly.

## Claims

1. Pad for the preparation of a drink suitable for consumption comprising:

   a storage volume,
   this storage volume comprising a water-soluble powder,
   the water-soluble powder is chosen from the group consisting of powder formed of milk or resulting from milk, creamer powders, toppings and/or their mixtures,
   the mean size of the powder particles being greater than or equal to 0.7 mm and preferably between 0.7 and 5 mm.

2. A pad according to claim 1, **characterized in that** the powder formed of milk or resulting from milk is obtained by granulation starting from a powdered milk.

3. A pad according to any one of the preceding claims, **characterized in that** the mean size of the powder particles is between 0.7 and 3 mm, preferably between 1 and 3 mm.

4. A pad according to any one of the preceding claims, **characterized in that** the bulk density of the water-soluble powder is between 150 and 350 g/l, preferably between 200 and 350 g/l.

5. A pad according to any one of the preceding claims, **characterized in that** the proportion by weight of particles having a size of less than 0.315 mm in the water-soluble powder is less than or equal to 20%, preferably to 10%, better still to 5%.

6. A pad according to any one of the preceding claims, **characterized in that** the storage volume has a volume greater than the volume of powder which it comprises, in a proportion ranging from 0.01 to 40%, preferably from 15 to 35%.

7. A pad according to any one of the preceding claims, **characterized in that** the pad is a rigid, semirigid or flexible pad.

8. A pad according to any one of the preceding claims, **characterized in that** it also comprises a rigid body forming compartments inside the storage volume.

9. A pad according to any one of the preceding claims, **characterized in that** the pad is a flexible or semirigid pad and **in that** it is equipped with a hoop positioned around it and internally, delimiting the storage volume.

10. A pad according to any one of Claims 1 to 8, **characterized in that** the pad is a flexible or semirigid pad and **in that** it is equipped with a hoop positioned around it and externally.

11. A pad according to any one of the preceding claims, **characterized in that** the pad comprises two superimposed compartments.

12. Process for the manufacture of a pad according to any one of the preceding claims, comprising the stages of:

   (a) sieving a water-soluble powder using a sieve with a mesh size of greater than 0.3 mm, preferably greater than 0.6 mm,
   (b) filling the storage volume with the water-soluble powder without packing down the particles forming the said water-soluble powder,
   (c) closing the storage volume.

13. Kit comprising a first pad according to any one of Claims 1 to 11 and a second pad comprising a product to be extracted or to be dissolved, preferably chosen from ground coffee, tea, chocolate or cocoa.

14. Use of a kit according to claim 13 in order to obtain a drink exhibiting layers which are different in colour, density and/or composition.

15. Use of a pad according to Claim 1 to Claim 11, alone or in combination with a second pad, in the preparation of a drink suitable for consumption, the second pad comprising a product to be extracted or to be dissolved, the second pad being used before, at the same time as or after the use of the first pad.


**Patentansprüche**

1. Pad für die Zubereitung eines zum Verbrauch geeigneten Getränks, welches aufweist:

   ein Speichervolumen,
   wobei dieses Speichervolumen ein wasserlösliches Pulver aufweist,
   das wasserlösliche Pulver ausgewählt ist aus der Gruppe bestehend aus Pulver, das aus Milch gebildet ist oder sich aus Milch ergibt,
   Creamer-Pulvern (Sahnepulver), Toppings und/oder ihren Mischungen,
   und die mittlere Größe der Pulverteilchen größer als oder gleich 0,7 mm und vorzugsweise zwischen 0,7 und 5 mm ist.

2. Pad nach Anspruch 1, **dadurch gekennzeichnet, dass** das aus Milch gebildete oder sich aus Milch ergebende Pulver durch Granulierung beginnend von einem Milchpulver aus erhalten ist.

3. Pad nach einem der vorhergehenden Ansprüche, **dadurch gekennzeichnet, dass** die mittlere Größe der Pulverteilchen zwischen 0,7 und 3 mm, vorzugsweise zwischen 1 und 3 mm ist.

4. Pad nach einem der vorhergehenden Ansprüche, **dadurch gekennzeichnet, dass** die Schüttdichte des wasserlöslichen Pulvers zwischen 150 und 350 g/l, vorzugsweise zwischen 200 und 350 g/l beträgt.

5. Pad nach einem der vorhergehenden Ansprüche, **dadurch gekennzeichnet, dass** das Gewichtsverhältnis von Teilchen mit einer Größe von weniger als 0,315 mm in dem wasserlöslichen Pulver weniger als oder gleich 20%, vorzugsweise 10%, besser noch 5% ist.

6. Pad nach einem der vorhergehenden Ansprüche, **dadurch gekennzeichnet, dass** das Speichervolumen ein Volumen hat, das größer als das Volumen von Pulver, das es aufweist, in einem Verhältnis im Bereich von 0,01 bis 40%, vorzugsweise von 15 bis 35% ist.

7. Pad nach einem der vorhergehenden Ansprüche, **dadurch gekennzeichnet, dass** das Pad ein starres, halbstarres oder flexibles Pad ist.

8. Pad nach einem der vorhergehenden Ansprüche, **dadurch gekennzeichnet, dass** es auch einen starren Körper aufweist, der Fächer innerhalb des Speichervolumens bildet.

9. Pad nach einem der vorhergehenden Ansprüche, **dadurch gekennzeichnet, dass** das Pad ein flexibles oder halbstarres Pad ist, und dass es mit einem Ring versehen ist, der um es herum und im Inneren angeordnet ist, wodurch das Speichervolumen beschränkt wird.

**10.** Pad nach einem der Ansprüche 1 bis 8, **dadurch gekennzeichnet, dass** das Pad ein flexibles oder halbstarres Pad ist, und dass es mit einem Ring versehen ist, der um es herum und außerhalb von diesem angeordnet ist.

**11.** Pad nach einem der vorhergehenden Ansprüche, **dadurch gekennzeichnet, dass** das Pad zwei übereinanderliegende Fächer aufweist.

**12.** Verfahren zur Herstellung eines Pads gemäß einem der vorhergehenden Ansprüche, aufweisend die Schritte:

a) Sieben eines wasserlöslichen Pulvers unter Verwendung eines Siebs mit einer aschengröße von mehr als 0,3 mm, vorzugsweise mehr als 0,6 mm,
b) Füllen des Speichervolumens mit dem wasserlöslichen Pulver, ohne die Teilchen, die das wasserlösliche Pulver bilden, zusammenzudrücken,
c) Schließen des Speichervolumens.

**13.** Satz aufweisend ein erstes Pad gemäß einem der Ansprüche 1 bis 11 und ein zweites Pad, das ein herauszuziehendes oder aufzulösendes Produkt au eist, vorzugsweise ausgewählt aus gemahlenem Kaffe, Tee, Schokolade oder Kakao.

**14.** Verwendung eines Satzes nach Anspruch 13, um ein Getränk zu erhalten, das Schichten zweigt, die in Bezug auf die Farbe, Dichte und/oder Zusammensetzung unterschiedlich sind.

**15.** Verwendung eines Pads nach Anspruch 1 bis Anspruch 11, allein oder in Verbindung mit einem zweiten Pad, für die Zubereitung eines zum Verbrauch geeigneten Getränks, wobei das zweite Pad ein herauszuziehendes oder aufzulösendes Produkt aufweist,
und wobei das zweite Pad vor, gleichzeitig mit oder nach der Verwendung des ersten Pads verwendet wird.

**Revendications**

**1.** Dosette pour la préparation d'une boisson adaptée pour consommation comprenant :

un volume de stockage,
ce volume de stockage comprenant une poudre hydrosoluble,
la poudre hydrosoluble est choisie dans le groupe constitué de poudre formée de lait ou résultant de lait, poudres d'agents de blanchiment à café, des garnitures et/ou leurs mélanges,
la taille moyenne des particules de poudre étant supérieure ou égale à 0,7 mm et de préférence entre 0,7 et 5 mm.

**2.** Dosette selon la revendication 1, **caractérisée en ce que** la poudre formée de lait ou dérivée de lait est obtenue par granulation à partir d'un lait en poudre.

**3.** Dosette selon l'une quelconque des revendications précédentes, **caractérisée en ce que** la taille moyenne des particules de poudre est comprise entre 0,7 et 3 mm, de préférence entre 1 et 3 mm.

**4.** Dosette selon l'une quelconque des revendications précédentes, **caractérisée en ce que** la densité apparente de la poudre hydrosoluble est comprise entre 150 et 350 g/l, de préférence entre 200 et 350 g/l.

**5.** Dosette selon l'une quelconque des revendications précédentes, **caractérisée en ce que** la proportion en poids de particules ayant une taille inférieure à 0,315 mm dans la poudre hydrosoluble est inférieure ou égale à 20 %, de préférence à 10 %, mieux encore à 5 %.

**6.** Dosette selon l'une quelconque des revendications précédentes, **caractérisée en ce que** le volume de stockage a un volume supérieur au volume de poudre qu'il comprend, dans une proportion allant de 0,01 à 40 %, de préférence de 15 à 35 %.

**7.** Dosette selon l'une quelconque des revendications précédentes, **caractérisée en ce que** la dosette est un dosette rigide, semirigide ou flexible.

**8.** Dosette selon l'une quelconque des revendications précédentes, **caractérisée en ce qu'**elle comprend en outre un corps rigide formant des compartiments à l'intérieur du volume de stockage.

9. Dosette selon l'une quelconque des revendications précédentes, **caractérisée en ce que** la dosette est une dosette flexible ou semi-rigide et **en ce qu'**elle est équipée d'un arceau positionné autour de celle-ci et de façon interne, délimitant le volume de stockage.

10. Dosette selon l'une quelconque des revendications 1 à 8, **caractérisée en ce que** la dosette est une dosette flexible ou semi-rigide et **en ce qu'**elle est équipée d'un arceau positionné autour de celle-ci et de façon externe.

11. Dosette selon l'une quelconque des revendications précédentes, **caractérisée en ce que** la dosette comprend deux compartiments superposés.

12. Procédé pour la fabrication d'une dosette selon l'une quelconque des revendications précédentes, comprenant les étapes de :

(a) tamisage d'une poudre hydrosoluble en utilisant un tamis ayant une taille de maille de plus de 0,3 mm, de préférence plus de 0,6 mm,
(b) remplissage du volume de stockage avec la poudre hydrosoluble sans tasser les particules formant ladite poudre hydrosoluble,
(c) fermeture du volume de stockage.

13. Kit comprenant une première dosette selon l'une quelconque des revendications 1 à 11 et une deuxième dosette comprenant un produit à extraire ou à dissoudre, de préférence choisi parmi du café moulu, thé, chocolat ou cacao.

14. Utilisation d'un kit selon la revendication 13 afin d'obtenir une boisson présentant des couches qui sont différentes en termes de couleur, de densité et/ou de composition.

15. Utilisation d'une dosette selon l'une des revendications 1 à 11, seule ou en combinaison avec une deuxième dosette pour la préparation d'une boisson adaptée pour consommation, la deuxième dosette comprenant un produit à extraire ou à dissoudre,
la deuxième dosette étant utilisée avant, en même temps que ou après l'utilisation de la première dosette.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0756844 A
- EP 1398279 A
- WO 2006043102 A